# FASCICULE DE BREVET EUROPEEN

(11) **EP 3 332 647 B1**
(45) Date de publication et mention de la délivrance du brevet: **27.04.2022**
(21) Numéro de dépôt: 16306644.2
(22) Date de dépôt: 08.12.2016
(51) Int. Cl.: A22C 7/00, B29C 33/00, A23P 30/10

(54) **PROCÉDÉ POUR LA FABRICATION D'ESCALOPES DE FOIE GRAS CRU**
HERSTELLUNGSVERFAHREN FÜR ROHE FOIE-GRAS-SEGMENTE
METHOD FOR MANUFACTURING RAW FOIE GRAS CUTLETS

(43) Date de publication de la demande: 13.06.2018
(73) Titulaire: Euralis Gastronomie, 64230 Lescar (FR)
(72) Inventeur: CLOCHARD, Joris, 85700 Pouzauges (FR); BARBE BARBE, Bénédicte, 64350 Simacourbe (FR); LIAIGRE, Pierre, 40800 Aire Sur L'Adour (FR); EYCHENNE, Jérémy, 64510 Bordes (FR); DELOBEL, Laurent, 65500 Vic En Bigorre (FR)
(74) Mandataire: Ipsilon

(56) Documents cités:
- DE-B- 1 124 388
- DE-U1- 29 720 029
- FR-A1- 2 710 821
- FR-A1- 2 983 683
- FR-A1- 3 029 073
- HU-B- 198 378
- Candylou: "FOIE GRAS MAISON (MOULE SILICONE) - Les recettes Tup de Candy Lou (recettes simples et faciles) !", , 26 décembre 2012 (2012-12-26), XP055375740, Extrait de l'Internet: URL:http://tupperfacile.canalblog.com/arch ives/2012/12/26/25999753.html [extrait le 2017-05-24]

## Description

L'invention concerne un procédé de fabrication d'escalopes de foie gras cru prêtes à cuire.

Plus précisément, elle se rapporte à un procédé de fabrication d'escalopes de foie gras cru, selon lequel les deux lobes du foie sont séparés après le retrait du foie de l'animal et ces lobes sont placés séparément dans un moule dont la forme correspond à la forme souhaitée des escalopes

Le document de brevet HU 224 533 concerne un tel procédé.

Selon ce procédé connu, il est recherché d'obtenir des escalopes de foie gras d'oie de dimension importante.

Pour ce faire, ce document divulgue un procédé comprenant les étapes suivantes :
- l'oie est pré-refroidi à une température inférieure à +8°C et le foie est retiré de l'animal,
- le foie est refroidi à une température maximale de 4°C,
- les deux lobes du foie sont séparés,
- ces lobes sont placés séparément dans un moule sous pression dont la forme correspond à la forme souhaitée des escalopes,
- chaque lobe y est compressé à une pression de 300 à 500 Newton et refroidi à une température de + 1 à -4°C,
- le lobe est sorti du moule et tranché,
- les escalopes obtenues sont congelées et/ou emballées.

S'il permet d'obtenir des escalopes de forme et dimension identiques, ce procédé pose le problème suivant.

Le refroidissement du foie à une température maximale de 4°C, puis la compression de chaque lobe dans un moule à une pression de 300 à 500 Newton avec son refroidissement à une température de + 1 à -4°C sont susceptibles d'abîmer le foie gras et sa texture.

Le document FR-A-3 029 073 décrit une composition de salaison et un procédé de préparation d'un produit alimentaire à base de chair animale.

Le document FR-A-2 710 821 décrit un procédé de préparation d'un foie gras cuit au torchon.

L'invention résout le problème ci-dessus en proposant un procédé de fabrication d'escalopes de foie gras cru, qui assure un compromis qui permette la fabrication d'escalopes de forme identique, tout en gardant les qualités optimales du foie gras.

Pour ce faire, l'invention propose un procédé de fabrication d'escalopes de foie gras cru conforme à la revendication 1.

Selon un mode de réalisation préféré de l'invention, le foie est tenu à une température comprise entre 15 à 40°C, jusqu'à la disposition du lobe séparé dans ledit moule.

Avantageusement, le foie est tenu à une température comprise entre 25 à 32°C, jusqu'à la disposition du lobe dans ledit moule.

Cette étape du procédé peut donc être réalisée tout simplement à la température ambiante d'un atelier de fabrication.

Le lobe est refroidi dans ledit moule à une température comprise entre -5 et + 8°C.

Avantageusement, le lobe est refroidi dans ledit moule à une température comprise entre +3 et + 6°C.

Une telle plage de température assure une texture plus dure du lobe qui facilite le tranchage et donc son rendement.

Par ailleurs, elle permet également de limiter voire même supprimer les étalements de sang hors de veines durant le tranchage ultérieur et d'améliorer l'aspect esthétique des escalopes.

Le lobe est de préférence tranché mécaniquement après son retrait dudit moule.

Alternativement, le lobe peut être tranché manuellement. Avantageusement, le lobe est tranché immédiatement après son retrait dudit moule.

Le lobe est de préférence tranché de façon oblique par rapport à son axe longitudinal.

Il est ainsi obtenu des escalopes d'aspect particulièrement gourmand.

Le foie est de préférence retiré de l'animal à la température corporelle de ce dernier.

Le retrait du foie d'un animal pré-refroidi à une température inférieure à +8°C, comme selon le document de l'art antérieur, est un procédé de retrait qui ne correspond plus aux impératifs hygiéniques industriels, les viscères de l'animal y étant susceptibles de contaminer le goût du foie.

De préférence, ladite cavité est d'une longueur et d'une largeur sensiblement égale à la longueur et à la largeur naturelle du lobe destiné à y être déposé.

L'invention est décrite ci-après plus en détail à l'aide de figures n'illustrant qu'un mode de réalisation préféré de l'invention.
La figure 1 est une vue en coupe verticale d'un moule pour la mise en oeuvre d'un procédé conforme à l'invention.
La figure 2 est une vue de dessus de ce moule avec un lobe de foie gras.
La figure 3 est une vue en perspective d'un lobe de foie gras obtenu grâce à l'invention.
La figure 4 est une vue en perspective d'un ensemble de moules pour la mise en oeuvre d'un procédé conforme à l'invention.
La figure 5 est une vue en coupe selon le plan A de la figure 4.

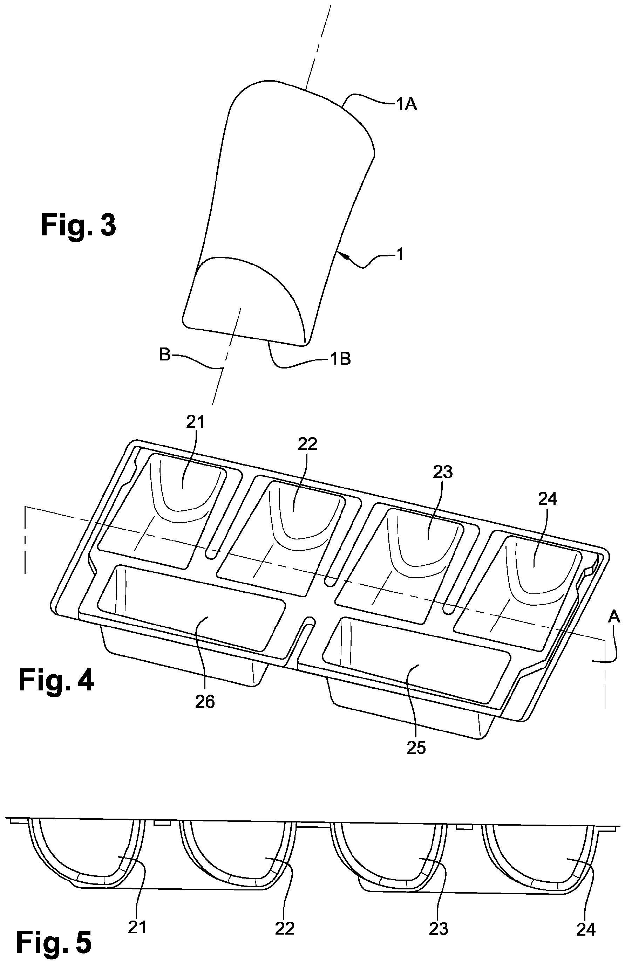

Un procédé de fabrication d'escalopes de foie gras cru prêtes à cuire, conforme à l'invention, comprend les étapes suivantes :
- le foie est retiré de l'animal à la température corporelle de ce dernier,
- le foie entier est refroidi à une température comprise entre 15 à 40°C, et de préférence comprise entre 25 et 32°C,
- les deux lobes du foie sont séparés,
- au moins le plus gros lobe 1 est posé dans un moule 2,
- ce lobe est refroidi dans le moule 2 à une température comprise entre -5 et +8°C, et de préférence à une température comprise entre +3 et +6°C,
- ce lobe moulé 1 tel que représenté sur la figure 3 comporte une face courbe 1A moulée par le moule et une face sensiblement droite 1B correspondante à sa face supérieure libre dans le moule et est tranché mécaniquement, en tranches d'épaisseur sensiblement constante, de façon oblique par rapport à son axe longitudinal B, après son retrait du moule, et de préférence immédiatement après son retrait du moule ; ce tranchage est effectué avantageusement selon un angle compris entre 60 et 65 degrés et de préférence selon un angle de 63 degrés, par rapport à un plan longitudinal contenant cet axe longitudinal B et parallèle à la face sensiblement droite 1B du lobe moulé,
- les escalopes ainsi obtenues sont de préférence surgelées, éventuellement congelées ou maintenues en froid positif, puis emballées.

Plus précisément, les foies gras entiers sont tout d'abord triés selon leur poids, plusieurs moules de dimension différente correspondante à un poids du foie étant utilisés.

A titre d'exemple, trois types de moules peuvent être utilisés, un premier pour des foies entiers de plus de 700 grammes, un deuxième pour des foies gras entiers de 500 à 700 grammes et un troisième pour des foies gras entiers de 400 à 500 grammes.

Les deux lobes du foie sont séparés et, sachant qu'un foie comporte un gros lobe et un petit lobe, deux types de moule de dimension différente peuvent être utilisés pour chaque lobe, si le petit lobe est également traité.

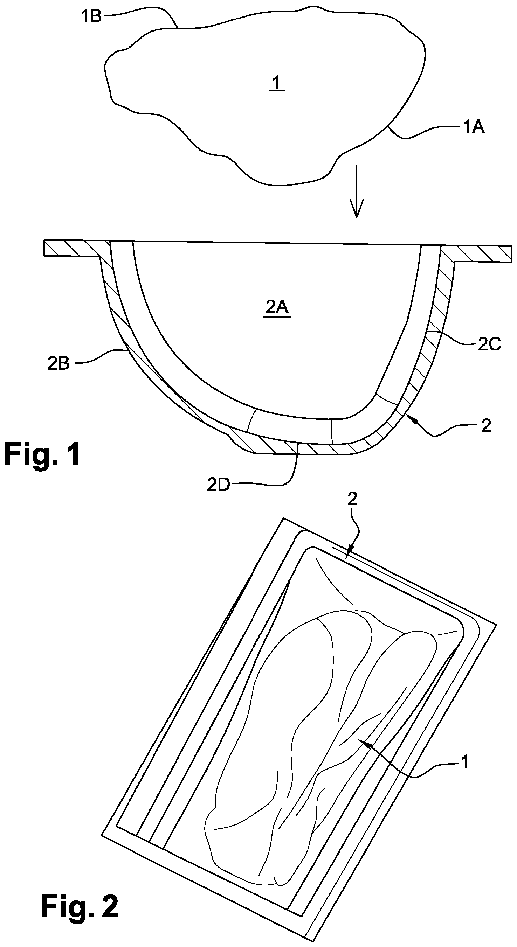

Comme illustré sur les figures 1 et 2, chaque lobe 1 est posé sous le seul effet de la pesanteur dans le moule 2 correspondant qui comporte une cavité 2A d'une courbure transversale correspondante à la forme souhaitée de la section des escalopes, la face naturelle la plus bombée 1A du lobe étant disposé au fond de cette cavité 2A.

Cette cavité 2A est d'une longueur et d'une largeur sensiblement égale à la longueur et à la largeur naturelle du lobe destiné à y être déposé.

Plus précisément, cette cavité 2A comporte ici transversalement une section plus arrondie sur un bord 2B que sur l'autre bord 2C, connectée par un tronçon de courbure asymptotique 2D. Plus généralement, il est recherché un rapport de la hauteur sur la largeur du lobe moulé aussi constant que possible. Il est ainsi obtenu une meilleure régularité visuelle des escalopes tranchées qui sont de forme identique. Les variations de poids entre chaque tranche d'escalope ne se traduisent pas par une variation disgracieuse de géométrie de la tranche, mais par un redimensionnement proportionné de l'ensemble de l'escalope.

Le lobe 1 est donc posé sous le seul effet de la pesanteur dans la cavité 2A du moule 2, la face naturelle la plus bombée 1A du lobe étant disposé au fond de cette cavité 2A et y prenant la forme souhaitée, comme visible sur la figure 3.

Une batterie de moules telle que représentée sur les figures 4 et 5 peut être utilisée pour traiter plusieurs lobes simultanément. L'exemple représentés comporte un ensemble de six moules 21 à 26.

## Revendications

1. Procédé de fabrication d'escalopes de foie gras cru, selon lequel
- les deux lobes du foie sont séparés après le retrait du foie de l'animal et
- au moins un des lobes (1) est placé dans un moule (2) dont la forme correspond à la forme souhaitée des escalopes, le moule comportant une cavité longitudinale (2A)
- le lobe (1) est posé sous le seul effet de la pesanteur dans la cavité longitudinale (2A), cette cavité (2A) présentant une courbure transversale correspondant à la forme souhaitée de la section des escalopes, assurant un rapport de la hauteur sur la largeur du lobe moulé, avant tranchage des escalopes, aussi constant que possible sur toute sa longueur. Ladite cavité (2A) comportant transversalement une section plus arrondie sur un bord (2B) que sur l'autre bord (2C), connectée par un tronçon de fond de courbure asymptotique (2D), la face naturelle la plus bombée (1A) du lobe (1) étant disposé au fond de cette cavité (2A)
- puis le lobe (1) est refroidi dans ledit moule (2) à une température comprise entre -5 et +8°C et enfin le lobe (1) est tranché après son retrait dudit moule (2).

2. Procédé selon la revendication précédente, caractérisé en ce le foie (1) est tenu à une température comprise entre 15 à 40°C, avant la disposition du lobe séparé dans ledit moule (2).

3. Procédé selon la revendication précédente, caractérisé en ce le foie (1) est tenu à une température comprise entre 25 à 32°C, avant la disposition du lobe dans ledit moule (2).

4. Procédé selon l'une des revendications précédentes, **caractérisé en ce que** le lobe (1) est refroidi dans ledit moule (2) à une température comprise entre +3 et +6°C.

5. Procédé selon l'une des revendications précédentes, **caractérisé en ce que** le lobe (1) est tranché mécaniquement.

6. Procédé selon l'une des revendications précédentes, **caractérisé en ce que** le lobe (1) est tranché immédiatement après son retrait dudit moule (2).

7. Procédé selon l'une des revendications précédentes, **caractérisé en ce que** le lobe (1) est tranché de façon oblique par rapport à son axe longitudinal (B).

8. Procédé selon l'une des revendications précédentes, **caractérisé en ce que** le foie est retiré de l'animal à la température corporelle de ce dernier.

## Patentansprüche

1. Verfahren zur Herstellung von rohen Foie-gras-Segmenten, wobei
- die zwei Lappen der Leber nach der Entnahme der Leber aus dem Tier separiert werden und
- mindestens einer der Lappen (1) in einer Form (2) platziert wird, deren Form der gewünschten Form der Segmente entspricht, wobei die Form einen länglichen Hohlraum (2A) aufweist
- der Lappen (1) einzig und allein unter der Wirkung der Schwerkraft in den länglichen Hohlraum (2A) gelegt wird, wobei dieser Hohlraum (2A) eine transversale Krümmung aufweist, die der gewünschten Form des Querschnitts der Segmente entspricht, die ein Verhältnis der Höhe zur Breite des geformten Lappens vor dem Tranchieren der Segmente sicher, so konstant wie möglich über dessen gesamte Länge ist, wobei der Hohlraum (2A) transversal einen auf einem Rand (2B) abgerundeteren Querschnitt als auf dem anderen Rand (2C) aufweist, der durch einen Bodenabschnitt mit asymptotischer Krümmung (2D) verbunden ist, wobei die natürlich bauchigste Fläche (1A) des Lappens (1) auf dem Boden dieses Hohlraums (2A) angeordnet ist
- der Lappen (1) dann in der Form (2) auf eine Temperatur gekühlt wird, die zwischen -5 und +8 °C liegt und schließlich der Lappen (1) nach seiner Entnahme aus der Form (2) tranchiert wird.

2. Verfahren nach vorangehendem Anspruch, **dadurch gekennzeichnet, dass** die Leber (1) vor der Anordnung des separierten Lappens in der Form (2) auf einer Temperatur gehalten wird, die zwischen 15 bis 40 °C liegt.

3. Verfahren nach vorangehendem Anspruch, **dadurch gekennzeichnet, dass** die Leber (1) vor der Anordnung des Lappens in der Form (2) auf einer Temperatur gehalten wird, die zwischen 25 bis 32 °C liegt.

4. Verfahren nach einem der vorangehenden Ansprüche, **dadurch gekennzeichnet, dass** der Lappen (1) in der Form (2) auf eine Temperatur gekühlt wird, die zwischen +3 und +6 °C liegt.

5. Verfahren nach einem der vorangehenden Ansprüche, **dadurch gekennzeichnet, dass** der Lappen (1) mechanisch tranchiert wird.

6. Verfahren nach einem der vorangehenden Ansprüche, **dadurch gekennzeichnet, dass** der Lappen (1) sofort nach seiner Entnahme aus der Form (2) tranchiert wird.

7. Verfahren nach einem der vorangehenden Ansprüche, **dadurch gekennzeichnet, dass** der Lappen (1) im Verhältnis zu seiner Längsachse (B) schräg tranchiert wird.

8. Verfahren nach einem der vorangehenden Ansprüche, **dadurch gekennzeichnet, dass** die Leber dem Tier bei Körpertemperatur desselben entnommen wird.

## Claims

1. A method for manufacturing raw foie gras cutlets, wherein
- the two lobes of the liver are separated after the liver is removed from the animal, and
- at least one of the lobes (1) is placed in a mold (2), the shape of which corresponds to the desired shape of the cutlets, the mold including a longitudinal cavity (2A)
- the lobe (1) is placed, under the sole effect of gravity, in the longitudinal cavity (2A), this cavity (2A) having a transverse curvature corresponding to the desired shape of the section of the cutlets, ensuring a ratio of the height to the width of the molded lobe, before slicing of the cutlets, that is as constant as possible over its entire length, said cavity (2A) transversely including a section that is rounder over one edge (2B) than over the other edge (2C), connected by a bottom section of asymptomatic curvature (2D), the most curved natural face (1A) of the lobe (1) being arranged at the bottom of this cavity (2A)
- then the lobe (1) is cooled in said mold (2) to a temperature of between -5 and +8°C, and lastly the lobe (1) is sliced after it is removed from said mold (2).

2. The method according to the preceding claim, **characterized in that** the liver (1) is kept at a temperature of between 15 to 40°C, before the separated lobe is arranged in said mold (2).

3. The method according to the preceding claim, **characterized in that** the liver (1) is kept at a temperature of between 25 to 32°C, before the lobe is arranged in said mold (2).

4. The method according to one of the preceding claims, **characterized in that** the lobe (1) is cooled in said mold (2) to a temperature of between +3 and +6°C.

5. The method according to one of the preceding claims, **characterized in that** the lobe (1) is sliced mechanically.

6. The method according to one of the preceding claims, **characterized in that** the lobe (1) is sliced immediately after it is removed from said mold (2).

7. The method according to one of the preceding claims, **characterized in that** the lobe (1) is sliced obliquely relative to its longitudinal axis (B).

8. The method according to one of the preceding claims, **characterized in that** the liver is removed from the animal at said animal's body temperature.
